# EUROPEAN PATENT SPECIFICATION

(11) **EP 2 458 784 B1**
(45) Date of publication and mention of the grant of the patent: **08.11.2017**
(21) Application number: 10852006.5
(22) Date of filing: 03.09.2010
(51) Int. Cl.: H04L 12/24, H04L 12/28, H04L 29/06

(54) **METHOD AND SYSTEM FOR MANAGING HOME GATEWAY DIGITAL CERTIFICATIONS**
VERFAHREN UND VORRICHTUNG ZUR VERWALTUNG DER BERECHTIGUNGEN FÜR EIN DIGITALES HEIM-GATE-NETZWERK
PROCÉDÉ ET SYSTÈME POUR LA GESTION DE CERTIFICATIONS NUMÉRIQUES DE PASSERELLE DOMESTIQUE

(30) Priority: 26.05.2010 CN 201010186829
(43) Date of publication of application: 30.05.2012
(73) Proprietor: ZTE Corporation, Shenzhen, Guangdong 518057 (CN)
(72) Inventor: XIAO, Liang, Shenzhen Guangdong 518057 (CN)
(74) Representative: Manitz Finsterwald Patentanwälte PartmbB
(86) International application number: PCT/CN2010/076608
(87) International publication number: WO 2011/147137

(56) References cited:
- EP-A1- 2 026 594
- CN-A- 1 905 452
- CN-A- 101 478 424
- CN-C- 100 596 069
- "Telecommunications and Internet converged Services and Protocols for Advanced Networking (TISPAN); Customer Network Gateway Configuration Function; e3 Interface based upon CWMP; ETSI TS 183 065", IEEE, LIS, SOPHIA ANTIPOLIS CEDEX, FRANCE, vol. TISPAN, no. V2.0.0, 1 February 2008 (2008-02-01), XP014041846, ISSN: 0000-0001
- FRANK VAN DER PUTTEN ALCATEL-LUCENT BELL NV BELGIUM: "Proposed New Recommendation on remote management of CPE over broadband networks â CPE WAN Management Protocol (CWMP);C 782", ITU-T DRAFTS ; STUDY PERIOD 2009-2012, INTERNATIONAL TELECOMMUNICATION UNION, GENEVA ; CH, vol. Study Group 15 ; 1, 2, 4/15, 12 May 2010 (2010-05-12), pages 1-15, XP017447483, [retrieved on 2010-05-12]

## Description

### Technical Field

The present invention relates to the field of communications technology, and more especially, to a method and system for managing digital certificates in a home gateway. Documents CN100596069C, EP2026594A1, "'Telecommunications and Internet converged Services and Protocols for Advanced Networking; customer network gateway configuration function; e3 interface based upon CWMP; ETSI TS 183065', IEEE, LIS, SOPHIA ANTIPOLIS CEDEX, FRANCE, vol. TISPAN, no. V2.0.0, 1 February 2008, XP 014041846, ISSN:0000-0001", and "FRANK VAN DER PUTTEN ALCATEL-LUCENT BELL NV BELGIUM: 'Proposed new recommendation on remote management of CPE over broadband networks a CPE wan management protocol CWMP); C 782', ITU-T DRAFTS; STUDY PERIOD 2009-2012, INTERNATIONAL TELECOMMUNICATION UNION, GENEVA; CH, vol. Study Group 15; 1, 2, 4/15, 12 May 2010, pages 1-15, XP017447483" disclose the related art.

### Background of the Related Art

Because of its security benefits, digital certificates have more and more front-end applications, and they are widely used in banking, Internet and other fields. Within the home gateway, due to some security requirements, a lot of functions are achieved based on digital certificates. For example, the encryption of the packets transmitted with the TR069 (Technical Report-069.CPE WAN Management Protocol) protocol, mutual authentication between the home gateway and the ACS (Auto-Configuration Server), the encryption of the wirelessly transmitted data, the encryption of the locally configured packets, all of which use the digital certificates.

The relatively common practice is that, when the home gateway is in production, the operators send the default digital certificates to the equipment manufacturers, and the equipment manufacturers preset the digital certificates into the home gateway, subsequently, the digital certificates can only be changed via the local WEB page. If the home gateway is placed at the user's home, the operators generally cannot replace the digital certificates in the home gateway. But the actual situation is, the operators likely need to update the digital certificates in the gateway, for example, when the digital certificates are about to expire, it needs to replace the encryption algorithm of a certificate, needs to replace the issuing authority of a certificate, or needs to replace the keys.

In summary, there is the following technical problem in the prior art: the existing implementation method generally presets the digital certificates in the device, thus the operators cannot remotely update the digital certificates in the home gateway. When the operators need to replace the digital certificates, unless on-site service, the digital certificates cannot be updated. This approach has a certain risk and also brings serious problems.

### Summary of the Invention

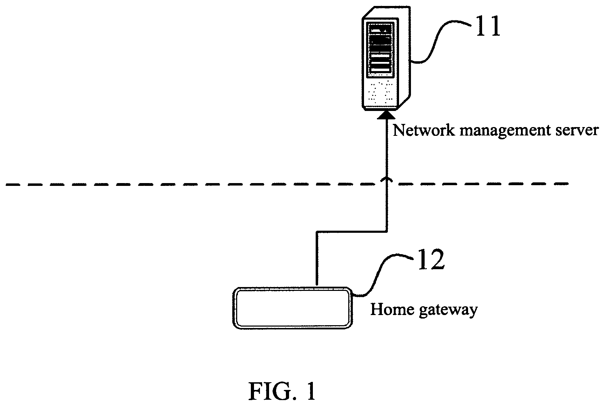

FIG. 1 shows a diagram of the service connection between the network management server and the home gateway, the network management server 11 and the home gateway 12 based on the connection relationship shown in FIG. 1 cannot remotely update the digital certificates in the home gateway.

To solve the technical problem, the present invention provides a method and system for managing digital certificates in a home gateway to remotely manage the digital certificates in the home gateway.

To solve the aforementioned problem, the present invention provides a method for managing digital certificate in a home gateway, a network management server sends certificate management information to the home gateway via the Technical Report-069.CPE WAN Management Protocol (TR069) packet, to remotely manage the digital certificates in the home gateway, wherein the certificate management information comprises two new objects defined according to the TR069 protocol format, including digital management object and digital certificate information object, wherein the digital certificate information object is an instance of the digital management object and carries parameter information of the digital certificates.

After the home gateway receives the TR069 packet, it manages the digital certificates as follows according to the certificate management information:
add digital certificates, update the digital certificates or delete the digital certificates.

The parameter information of the digital certificate information object comprises one or any combination of the following items:
Content (Content);
Certificate Type (Type);
Effective time (StartTime);
Expiration time (EndTime);
Digital certificate issuer parameter (IsUser); and
Digital certificate user parameter (User).

When adding a digital certificate, the method comprises:
the network management server uses the TR-069 protocol remote procedure to call method AddObject to require the home gateway to add a new instance of the digital certificate information object;
the network management server uses the TR-069 protocol remote procedure to call method SetParameterValues to set the parameter value of the content of the added example, so as to set the content of the added digital certificate; and
the network management server uses the TR-069 protocol remote procedure to call method SetParameterValues to set the parameter value of the certificate type (Type) of the added example, so as to set the certificate type of the added certificate.

When updating the digital certificates, the method comprises:
from all the instances of the digital certificate information object, the network management server determines the one corresponding to the digital certificate to be updated, and uses the TR-069 protocol remote procedure to call method SetParameterValues to set the information parameter value of the digital certificate to be updated, and the information parameter value comprises StartTime and EndTime.

When deleting digital certificates, the method comprises:
from all the instances of the digital certificate information object, the network management server determines the one corresponding to the digital certificate to be deleted, and uses the TR-069 protocol remote procedure to call method DeleteObject to require the home gateway to delete the instance corresponding to the digital certificate to be deleted.

When the network management server determines the instance corresponding to the digital certificate to be updated, the method also comprises:
verify the correctness of the digital certificate content.
In addition, the present invention also provides a system for managing digital certificate in a home gateway, and the system comprises a network management server, and the network management server comprises a certificate management decision module,
the certificate management decision module is set to, send certificate management information to the home gateway via the Technical Report-069.CPE WAN Management Protocol (TR069) packet, to remotely manage the digital certificates in the home gateway, wherein the certificate management information comprises two new objects defined according to the TR069 protocol format, including digital management object and digital certificate information object, wherein the digital certificate information object is an instance of the digital management object and carries parameter information of the digital certificates.

The system also comprises a home gateway, and the home gateway comprises a certificate management implementation module,
the certificate management implementation module is set to, after receiving the TR069 packet, manage the digital certificates as follows according to the certificate management information:
add digital certificates, update the digital certificates or delete the digital certificates.

The certificate management decision module is also set to, define the digital certificate information object according to the TR069 protocol format;
the parameter information of the digital certificate information object comprises one or any combination of the following items:
content (Content);
certificate Type (Type);
effective time (StartTime);
expiration time (EndTime);
digital certificate issuer parameter (IsUser); and
digital certificate user parameter (User).

The certificate management decision module is also set to add digital certificates according to the following way:
use the TR-069 protocol remote procedure to call method AddObject to require the home gateway to add a new instance of the digital certificate information object;
use the TR-069 protocol remote procedure to call method SetParameterValues to set the parameter value of the added Example content, so as to set the content of the added digital certificate; and
use the TR-069 protocol remote procedure to call method SetParameterValues to set the parameter value of the certificate type (Type) of the added instance, so as to set the certificate type of the added certificate; and/or
update the digital certificates according to the following way:
   from all the instances of the digital certificate information object, determine the one corresponding to the digital certificate to be updated, and use the TR-069 protocol remote procedure to call method SetParameterValues to set the information parameter value of the digital certificate to be updated, and the information parameter value comprises StartTime and EndTime; and/or
   delete digital certificates according to the following way:
   from all the instances of the digital certificate information object, determine the one corresponding to the digital certificate to be deleted, and use the TR-069 protocol remote procedure to call method DeleteObject to require the home gateway to delete the instance corresponding to the digital certificate to be deleted.

Compared with the prior art, the beneficial effects of the present invention are:
the present invention provides a solution for remotely managing the digital certificates, and the solution specifically comprises adding, updating, and deleting the digital certificates in the home gateway, so that when the digital certificate of an operator changes, the digital certificates in the user's home gateway can be remotely and directly updated, thus to make up the defect that the operator cannot update the certificate after delivery; moreover, with the technical solution of the present invention, the operators can more easily and quickly replace the digital certificates to make up the defects in the prior art.

### Brief Description of Drawings

FIG. 1 is a diagram of service connection between the network management server and the home gateway;
FIG. 2 is a flow chart of remotely managing the digital certificates in a home gateway in an application example of the present invention;
FIG. 3 is a diagram of a system for managing digital certificates in a home gateway in accordance with an embodiment of the present invention.

### Preferred Embodiments of the Present Invention

The basic idea of the present invention is as follows: the network management server remotely sends a packet to the home gateway via the TR-069 protocol, the packet comprises the objects and parameters for managing the digital certificates in the home gateway, and these objects and parameters are defined according to the standard TR069 protocol format; the home gateway manages the digital certificates according to the objects and parameters in the received packet.

Based on the above idea, the present invention provides a method for managing digital certificates in a home gateway, and the following technical solution is used:
the network management server sends the certificate management information to the home gateway via the TR069 packet;
after the home gateway receives the packet, it manages the digital certificates according to the certificate management information in the packet.

The certificate management information comprises: digital certificate information object, the parameter information of the digital certificate information object.

The digital certificate information object is defined according to TR069 protocol format.

Managing the digital certificates comprises:
adding digital certificates, updating the digital certificates or deleting the digital certificates.

The implementation of the technical solution of the present invention will be described in further detail in the following with combination of specific examples and the accompanying figures.

Since there might be a plurality of certificates in the home gateway, the management of the digital certificates in the home gateway relates to the following information:
1. the number of digital certificates in the home gateway, that is, how many digital certificates in the home gateway there are;
2. the basic information of each digital certificate, that is, the file information of the digital certificate;
3. content of the digital certificates, such as issuing authority, effective date, expiration date, where the information can be directly extracted from the digital certificate file content;
4. types of the digital certificates, which is now generally divided into the root certificates, intermediate certificates;
5. the usage illustration of the digital certificates, for example, the certificate is used by the TR069 to connect the ACS or used wirelessly, and so on.

Based on the above management needs, in order to remotely update the digital certificates in the home gateway, in the embodiment of the present invention, the TR-069 protocol should be necessarily extended, comprising:
add two new objects in the TR-069 protocol:
   Digital management object InternetGatewayDevice.X_ZTE_CertConfig.
   Digital certificate information object InternetGatewayDevice.X_ZTE_CertConfig.CertInfo.

The content and parameters of the two objects are described in the following table 1:

**Table 1**

| Name | Type | Writable | Readable | Description |
|---|---|---|---|---|
| InternetGatewayDev ice.X_ZTE_CertCon fig. | Object | No | Yes | Digital certificate management object |
| CertNumberOfEntrie s | Parameter (unsigned int) | No | Yes | The number of digital certificates in the device |
| InternetGatewayDev ice.X_ZTE_CertCon fig.CertInfo.{i}. | Object | Yes | Yes | Digital certificate information object |
| IsUser | Parameter (String (64)) | No | Yes | Digital certificate issuer (issuing authority) |
| User | Parameter (String (64)) | No | Yes | Digital certificate user (institute) |
| StartTime | Parameter (DateTime ) | No | Yes | Effective date |
| EndTime | Parameter (DateTime ) | No | Yes | Expiration date |
| Type | Parameter (string) | No | Yes | Certificate type, enumeration values are: "Intermediate Certificate" "Root certificate" |
| Content | Parameter (String(10 K)) | Yes | Yes | Certificate content, whose value can be directly changed so as to change the digital certificate. |

Refer to Table 1, the digital management object comprises the following parameters:
the number of digital certificates in the device: CertNumberOfEntries.

The digital certificate information object is an instance of the digital management object, and it comprises the following parameters:
Digital certificate issuer (issuing authority) parameter: IsUser;
Digital certificate user (institution) parameter: User;
Effective Date parameter: StartTime;
Expiration date parameter: EndTime;
Certificate type parameter: Type;
Certificate content parameter: Content.

The parameter type of the digital certificate issuer (organization) parameter and the digital certificate user (organization) parameter is 64-bit string (String (64));
the parameter type of the effective date parameter and the expiration date parameter is Date (DateTime);
the parameter type of the certificate type parameter is string, and the enumeration values are:
"Intermediate Certificate"
"Root certificate"
the parameter type of the certificate content parameter is String (10K), and the parameter value can be directly changed to update the digital certificate.

In the following, the specific implementation steps of remotely managing the digital certificates in the home gateway in accordance with the present invention will be described in more detail.

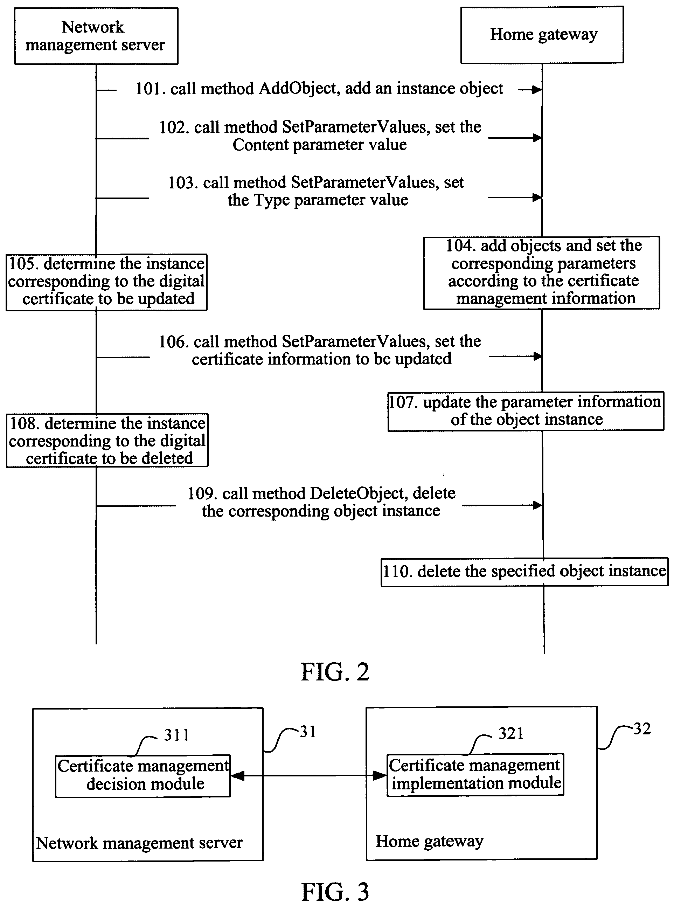

FIG. 2 shows the three main processes of remotely managing the digital certificates in the home gateway in accordance with the present invention, and the three main processes are: adding new digital certificates, updating the digital certificates, and deleting one or more digital certificates.

As shown in FIG. 2, the specific process of remotely managing the digital certificates in the home gateway in this example will be described in the following:
A. the process of adding new digital certificates, specifically comprising:
   step 101, the network management server (or ACS) using the TR-069 remote procedure to call method AddObject to require the home gateway to add a new instance of the digital certificate information object InternetGatewayDevice.X_ZTE_CertConfig.CertInfo.;
   step 102, using the TR-069 protocol remote procedure to call method SetParameterValues to set the Content parameter value of the instance added in step 101, so as to set the content of the certificate;
   step 103, using the TR-069 protocol remote procedure to call method SetParameterValues to set the Type parameter value of the instance added in step 101, so as to set the type of the added certificate;
   step 104, the home gateway adding the corresponding instance based on the certificate management information such as the objects and parameters sent by the network management server, and setting the corresponding parameters;
B. the process of updating the existing digital certificates, specifically comprising:
   step 105, determining an instance to which the certificate to be updated corresponds from all the instances of the object InternetGatewayDevice.X_ZTE_CertConfig.CertInfo.;
   step 106, using the TR-069 protocol remote procedure to call method SetParameterValues to set the parameter information, such as the effective time and the expiration time, of the certificate to be updated;
   step 107, the home gateway updating the corresponding parameter information of the instance;
C. the process of deleting a digital certificate, specifically comprising:
   step 108, determining an instance to which the certificate to be deleted corresponds from all the instances of the object InternetGatewayDevice.X_ZTE_CertConfig.CertInfo.;
   step 109, using the TR-069 protocol remote procedure to call method DeleteObject to delete the certificate instance in the home gateway;
   step 110, the home gateway deleting the certificate instance.

In addition, when the network server or the ACS updates the digital certificates, it can also verify the content of the digital certificates, so as to ensure the correctness of the content of the digital certificates.

Correspondingly, the embodiment of the present invention also comprises a system for managing digital certificate in a home gateway, as shown in FIG. 3, the system comprises the network management server 31, and the network management server 31 further comprises the certificate management decision module 311, wherein,
the certificate management decision module is set to, send certificate management information to the home gateway via the TR069 packet, to remotely manage the digital certificates in the home gateway.

In addition, the system also comprises the home gateway 32, and the home gateway 32 further comprises the certificate management implementation module 321,
the certificate management implementation module is set to, after receiving the TR069 packet, manage the digital certificates as follows according to the certificate management information:
adding digital certificates, updating the digital certificates or deleting the digital certificates.
In addition, the certificate management decision module is also set to: define the digital certificate information object according to the TR069 protocol format, and the certificate management information comprises: digital certificate information object, and parameter information of the digital certificate information object;
wherein, the parameter information of the digital certificate information object comprises one or any combination of the following items:
   Content (Content);
   Certificate Type (Type);
   Effective time (StartTime);
   Expiration time (EndTime);
   Digital certificate issuer parameter (IsUser); and
   Digital certificate user parameter (User).
   In addition, the certificate management decision module is also set to,
   add digital certificates according to the following way:
the network management server uses the TR-069 protocol remote procedure to call method AddObject to require the home gateway to add a new instance of the digital certificate information object;
the network management server uses the TR-069 protocol remote procedure to call method SetParameterValues to set the content parameter value of the added instance, so as to set the content of the added digital certificate; and
the network management server uses the TR-069 protocol remote procedure to call method SetParameterValues to set the parameter value of the certificate type (Type) of the added instance, so as to set the certificate type of the added certificate;
update the digital certificates according to the following way:
   from all the instances of the digital certificate information object, the network management server determines the one corresponding to the digital certificate to be updated, and uses the TR-069 protocol remote procedure to call method SetParameterValues to set the information parameter value of the digital certificate to be updated, and the information parameter value comprises StartTime and EndTime; and/or
   delete the digital certificates according to the following way:
      from all the instances of the digital certificate information object, the network management server determines the one corresponding to the digital certificate to be deleted, and uses the TR-069 protocol remote procedure to call method DeleteObject to require the home gateway to delete the instant corresponding to the digital certificate to be deleted.

It can be understood by those skilled in the field that some or all steps in the abovementioned method can be fulfilled by instructing the relevant hardware components with a program, and said program is stored in a computer readable storage media such as read only memory, magnetic disk or optical disk. Optionally, all or some steps of the aforementioned embodiment can be implemented with one or more integrated circuits. Correspondingly, each module/unit in the aforementioned embodiment can be implemented in the form of hardware or software function module. The present invention is not limited to any combination of specific hardware and software forms.

The above description is the preferred embodiment of the present invention and is not intended to limit the present invention, and for those skilled in the field, the present invention has a variety of modifications and variations. Without departing from the principle of the present invention as defined in the claims, all these types of modification, equivalences and improvements should belong to the scope of the claims of the present invention.

### Industrial Applicability

The method and system for remotely managing the digital certificates provided in the present invention specifically comprise adding, updating, and deleting the digital certificates in the home gateway, so that when the digital certificate of an operator changes, the digital certificates in the user's home gateway can be remotely and directly updated, thus to make up the defect that the operator cannot update the certificate after delivery.

## Claims

1. A method for managing digital certificates in a home gateway (32), comprising: a network management server (31) sending (101, 102, 103, 106, 109) certificate management information to the home gateway (32) via a Technical Report-069.CPE WAN Management Protocol, TR069, packet, to remotely manage digital certificates in the home gateway (32), wherein the certificate management information comprises two new objects defined according to the TR069 protocol format, including digital management object and digital certificate information object, wherein the digital certificate information object is an instance of the digital management object and carries parameter information of the digital certificates.

2. The method of claim 1, wherein the method also comprises:
after the home gateway (32) receives the TR069 packet, the home gateway (32) managing the digital certificates as follows according to the certificate management information in the packet:
adding (104) digital certificates, updating (107) digital certificates or deleting (110) digital certificates.

3. The method of claim 1 or 2, wherein the parameter information of the digital certificate information object comprises one or any combination of following items:
content, Content;
certificate Type, Type;
effective time, StartTime;
expiration time, EndTime;
digital certificate issuer parameter, IsUser; and
digital certificate user parameter, User.

4. The method of claim 3, wherein
when adding a digital certificate, the method comprises:
the network management server (31) using (101) TR-069 protocol remote procedure to call method add-object, AddObject, to require the home gateway (32) to add a new instance of the digital certificate information object;
the network management server (31) using (102) TR-069 protocol remote procedure to call method set-parameter-values, SetParameterValues, to set the Content parameter value of the added instance, so as to set the content of the added digital certificate; and
the network management server (31) using (103) the TR-069 protocol remote procedure to call method SetParameterValues to set the certificate Type parameter value of the added instance, so as to set the certificate type of the added certificate.

5. The method of claim 3, wherein
when updating the digital certificates, the method comprises:
from all the instances of the digital certificate information object, the network management server (31) determining one instance corresponding to a to-be-updated the digital certificate, and using (106) the TR-069 protocol remote procedure to call the method SetParameterValues to set information parameter values of the to-be-updated digital certificate, and the information parameter value comprising StartTime and EndTime.

6. The method of claim 3, wherein
when deleting digital certificates, the method comprises:
from all the instances of the digital certificate information object, the network management server (31) determining one instance corresponding to a to-be-deleted digital certificate, and using (109) TR-069 protocol remote procedure to call method delete-object, DeleteObject, to require the home gateway (32) to delete the instance corresponding to the to-be-deleted digital certificate.

7. The method of claim 5, wherein when the network management server (31) determines the instance corresponding to the to-be-updated digital certificate, the method also comprises:
verifying correctness of the content of the digital certificate.

8. A system for managing digital certificates in a home gateway (32), wherein the system comprises a network management server (31) and a home gateway (32),
the network management server (31) comprises a certificate management decision module (311),
the certificate management decision module (311) is set to, send certificate management information to the home gateway (32) via a Technical Report-069.CPE WAN Management Protocol, TR069, packet, to remotely manage the digital certificates in the home gateway (32),
wherein the certificate management information comprises two new objects defined according to the TR069 protocol format, including digital management object and digital certificate information object, wherein the digital certificate information object is an instance of the digital management object and carries parameter information of the digital certificates.

9. The system of claim 8, wherein the home gateway (32) comprises a certificate management implementation module (321),
the certificate management implementation module (321) is set to, after receiving the TR069 packet, manage the digital certificates as follows according to the certificate management information in the packet:
adding digital certificates, updating digital certificates or deleting digital certificates.

10. The system of claim 8 or 9,
wherein the parameter information of the digital certificate information object comprises one or any combination of following items:
content, Content;
certificate type, Type;
effective time, StartTime;
expiration time, EndTime;
digital certificate issuer parameter, IsUser; and
digital certificate user parameter, User.

11. The system of claim 10, wherein
the certificate management decision module (311) is also set to,
add digital certificates according to a following way:
using TR-069 protocol remote procedure to call method add-object, AddObject, to require the home gateway (32) to add a new instance of the digital certificate information object;
using TR-069 protocol remote procedure to call method set-parameter-values, SetParameterValues, to set the Content parameter values of the added instance, so as to set the content of the added digital certificate; and
using the TR-069 protocol remote procedure to call method SetParameterValues to set parameter values of the certificate Type of the added instance, so as to set the certificate type of the added certificate; and/or
update digital certificates according to a following way:
from all the instances of the digital certificate information object, determining one instance corresponding to a to-be-updated digital certificate, and using the TR-069 protocol remote procedure to call method SetParameterValues to set information parameter values of the to-be-updated digital certificate, and the information parameter value comprising StartTime and EndTime; and/or
delete digital certificates according to a following way:
from all the instances of the digital certificate information object, determining one instance corresponding to a to-be-deleted digital certificate, and using TR-069 protocol remote procedure to call method delete-object, DeleteObject to require the home gateway (32) to delete the instance corresponding to the to-be-deleted digital certificate.

## Patentansprüche

1. Verfahren zum Verwalten digitaler Zertifikate in einem Home-Gateway (32), wobei das Verfahren umfasst, dass: ein Netzwerkmanagementserver (31) Zertifikatverwaltungsinformationen über ein Paket eines WAN-Verwaltungsprotokolls des Technical Report-069.CPE, TR069-Paket, an das Home-Gateway (32) sendet (101, 102, 103, 106, 109), um digitale Zertifikate in dem Home-Gateway (32) aus der Ferne zu verwalten, wobei die Zertifikatverwaltungsinformationen zwei neue Objekte umfassen, die in Übereinstimmung mit dem TR069-Protokollformat definiert sind und ein digitales Verwaltungsobjekt und ein digitales Zertifikatinformationsobjekt umfassen, wobei das digitale Zertifikatinformationsobjekt eine Instanz des digitalen Verwaltungsobjekts ist und Parameterinformationen der digitalen Zertifikate trägt.

2. Verfahren nach Anspruch 1, wobei das Verfahren außerdem umfasst, dass:
das Home-Gateway (32), nachdem es das TR069-Paket empfangen hat, die digitalen Zertifikate in Übereinstimmung mit den Zertifikatverwaltungsinformationen in dem Paket wie folgt verwaltet:
Hinzufügen (104) von digitalen Zertifikaten, Aktualisieren (107) von digitalen Zertifikaten oder Löschen (110) von digitalen Zertifikaten.

3. Verfahren nach Anspruch 1 oder 2, wobei die Parameterinformationen des digitalen Zertifikatinformationsobjekts eines oder eine beliebige Kombination der folgenden Dinge umfassen:
Inhalt, Inhalt;
Zertifikattyp, Typ;
effektiver Zeitpunkt, Startzeitpunkt;
Ablaufzeitpunkt, Endzeitpunkt;
Parameter des Herausgebers des digitalen Zertifikats, IsUser; und
Parameter des Nutzers des digitalen Zertifikats, User.

4. Verfahren nach Anspruch 3, wobei
das Verfahren beim Hinzufügen eines digitalen Zertifikats umfasst, dass:
der Netzwerkmanagementserver (31) eine Fernsteuerungsprozedur des TR-069-Protokolls verwendet (101), um ein Verfahren zum Hinzufügen eines Objekts, AddObject, aufzurufen, um anzufordern, dass das Home-Gateway (32) eine neue Instanz des digitalen Zertifikatinformationsobjekts hinzufügt;
der Netzwerkmanagementserver (31) die Fernsteuerungsprozedur des TR-069-Protokolls verwendet (102), um ein Verfahren zum Einstellen von Parameterwerten, SetParameterValues, aufzurufen, um den Inhaltsparameterwert der hinzugefügten Instanz einzustellen, um den Inhalt des hinzugefügten digitalen Zertifikats einzustellen; und
der Netzwerkmanagementserver (31) die Fernsteuerungsprozedur des TR-069-Protokolls verwendet (103), um das Verfahren SetParameterValues aufzurufen, um den Parameterwert des Zertifikattyps der hinzugefügten Instanz einzustellen, um den Zertifikattyp des hinzugefügten Zertifikats einzustellen.

5. Verfahren nach Anspruch 3, wobei
das Verfahren beim Aktualisieren der digitalen Zertifikate umfasst, dass:
der Netzwerkmanagementserver (31) aus allen Instanzen des digitalen Zertifikatinformationsobjekts eine Instanz ermittelt, die einem zu aktualisierenden digitalen Zertifikat entspricht, und die Fernsteuerungsprozedur des TR-069-Protokolls verwendet (106), um das Verfahren SetParameterValues aufzurufen, um Informationsparameterwerte des zu aktualisierenden digitalen Zertifikats, und den Informationsparameterwert, der Startzeitpunkt und Endzeitpunkt umfasst, einzustellen.

6. Verfahren nach Anspruch 3, wobei
das Verfahren beim Löschen digitaler Zertifikate umfasst, dass:
der Netzwerkmanagementserver (31) aus allen Instanzen des digitalen Zertifikatinformationsobjekts eine Instanz ermittelt, die einem zu löschenden digitalen Zertifikat entspricht, und die Fernsteuerungsprozedur des TR-069-Protokolls verwendet (109), um ein Verfahren zum Löschen eines Objekts, DeleteObject, aufzurufen, um anzufordern, dass das Home-Gateway (32) die Instanz löscht, die dem zu löschenden digitalen Zertifikat entspricht.

7. Verfahren nach Anspruch 5, wobei das Verfahren, wenn der Netzwerkmanagementserver (31) die Instanz ermittelt, die dem zu aktualisierenden digitalen Zertifikat entspricht, außerdem umfasst, dass:
die Korrektheit des Inhalts des digitalen Zertifikats verifiziert wird.

8. System zum Verwalten digitaler Zertifikate in einem Home-Gateway (32), wobei das System einen Netzwerkmanagementserver (31) und ein Home-Gateway (32) umfasst,
wobei der Netzwerkmanagementserver (31) ein Zertifikatverwaltungs-Entscheidungsmodul (311) umfasst,
das Zertifikatverwaltungs-Entscheidungsmodul (311) eingestellt ist, um über ein Paket eines WAN-Verwaltungsprotokolls des Technical Report 069.CPE, TR069-Paket, Zertifikatverwaltungsinformationen an das Home-Gateway (32) zu senden, um die digitalen Zertifikate in dem Home-Gateway (32) aus der Ferne zu verwalten,
wobei die Zertifikatverwaltungsinformationen zwei neue Objekte umfassen, die in Übereinstimmung mit dem TR069-Protokollformat definiert sind und ein digitales Verwaltungsobjekt und ein digitales Zertifikatinformationsobjekt umfassen, wobei das digitale Zertifikatinformationsobjekt eine Instanz des digitalen Verwaltungsobjekts ist und Parameterinformationen der digitalen Zertifikate trägt.

9. System nach Anspruch 8, wobei das Home-Gateway (32) ein Zertifikatverwaltungs-Implementierungsmodul (321) umfasst,
wobei das Zertifikatverwaltungs-Implementierungsmodul (321) eingestellt ist, um nach Empfang des TR069-Pakets die digitalen Zertifikate in Übereinstimmung mit den Zertifikatverwaltungsinformationen in dem Paket wie folgt zu verwalten:
Hinzufügen von digitalen Zertifikaten, Aktualisieren von digitalen Zertifikaten oder Löschen von digitalen Zertifikaten.

10. System nach Anspruch 8 oder 9,
wobei die Parameterinformationen des digitalen Zertifikatinformationsobjekts eines oder eine beliebige Kombination der folgenden Dinge umfassen:
Inhalt, Inhalt;
Zertifikattyp, Typ;
effektiver Zeitpunkt, Startzeitpunkt;
Ablaufzeitpunkt, Endzeitpunkt;
Parameter des Herausgebers des digitalen Zertifikats, IsUser; und
Parameter des Nutzers des digitalen Zertifikats, User.

11. System nach Anspruch 10, wobei
das Zertifikatverwaltungs-Entscheidungsmodul (311) außerdem eingestellt ist, um
digitale Zertifikate in Übereinstimmung mit folgendem Weg hinzuzufügen:
eine Fernsteuerungsprozedur des TR-069-Protokolls zu verwenden, um ein Verfahren zum Hinzufügen eines Objekts, AddObject, aufzurufen, um anzufordern, dass das Home-Gateway (32) eine neue Instanz des digitalen Zertifikatinformationsobjekts hinzufügt;
die Fernsteuerungsprozedur des TR-069-Protokolls zu verwenden, um ein Verfahren zum Einstellen von Parameterwerten, SetParameterValues, aufzurufen, um die Inhaltsparameterwerte der hinzugefügten Instanz einzustellen, um dadurch den Inhalt des hinzugefügten digitalen Zertifikats einzustellen; und
die Fernsteuerungsprozedur des TR-069-Protokolls zu verwenden, um das Verfahren SetParameterValues aufzurufen, um Parameterwerte des Zertifikattyps der hinzugefügten Instanz einzustellen, um dadurch den Zertifikattyp des hinzugefügten Zertifikats einzustellen; und/oder
digitale Zertifikate in Übereinstimmung mit folgendem Weg zu aktualisieren:
Ermitteln einer Instanz aus allen Instanzen des digitalen Zertifikatinformationsobjekts, die einem zu aktualisierenden digitalen Zertifikat entspricht, und Verwenden der Fernsteuerungsprozedur des TR-069-Protokolls, um das Verfahren SetParameterValues aufzurufen, um Informationsparameterwerte des zu aktualisierenden digitalen Zertifikats und den Informationsparameterwert, der Startzeitpunkt und Endzeitpunkt umfasst; einzustellen; und/oder
digitale Zertifikate in Übereinstimmung mit folgendem Weg zu löschen:
Ermitteln einer Instanz aus allen Instanzen des digitalen Zertifikatinformationsobjekts, die dem zu löschenden digitalen Zertifikat entspricht, und Verwenden der Fernsteuerungsprozedur des TR-069-Protokolls, um ein Verfahren zum Löschen eines Objekts, DeleteObject, aufzurufen, um anzufordern, dass das Home-Gateway (32) die Instanz, die dem zu löschenden digitalen Zertifikat entspricht, löscht.

## Revendications

1. Procédé de gestion de certificats numériques dans une passerelle domestique (32), comprenant : l'envoi (101, 102, 103, 106, 109), par le biais d'un serveur de gestion de réseau (31), d'informations de gestion de certificats à la passerelle domestique (32) par l'intermédiaire d'un paquet de Protocole de Gestion CPE WAN dit Technical Report-069, TR069, pour gérer à distance des certificats numériques dans la passerelle domestique (32), où les informations de gestion de certificats comprennent deux nouveaux objets définis selon le format de protocole TR069, comportant un objet de gestion numérique et un objet d'informations de certificat numérique, où l'objet d'informations de certificat numérique est une instance de l'objet de gestion numérique et contient des informations de paramètres des certificats numériques.

2. Procédé de la revendication 1, dans lequel le procédé comprend également :
après que la passerelle domestique (32) reçoit le paquet TR069, la gestion, par le biais de la passerelle domestique (32), des certificats numériques comme suit selon les informations de gestion de certificats dans le paquet :
l'ajout (104) de certificats numériques, la mise à jour (107) de certificats numériques ou l'effacement (110) de certificats numériques.

3. Procédé de la revendication 1 ou 2, dans lequel les informations de paramètres de l'objet d'informations de certificat numérique comprennent l'un ou une combinaison quelconque des éléments suivants :
le contenu, Content ;
le type de certificat, Type ;
le temps de prise d'effet, StartTime ;
le temps d'expiration, EndTime ;
le paramètre d'émetteur de certificat numérique, IsUser ; et
le paramètre d'utilisateur de certificat numérique, User.

4. Procédé de la revendication 3, dans lequel
lors de l'ajout d'un certificat numérique, le procédé comprend :
l'utilisation (101), par le serveur de gestion de réseau (31), de la procédure à distance du protocole TR-069 pour appeler la méthode ajouter un objet, AddObject, pour demander à la passerelle domestique (32) d'ajouter une nouvelle instance de l'objet d'informations de certificat numérique ;
l'utilisation (102), par le serveur de gestion de réseau (31), de la procédure à distance du protocole TR-069 pour appeler la méthode définir les valeurs de paramètres, SetParameterValues, pour définir la valeur du paramètre Contenu de l'instance ajoutée, afin de définir le contenu du certificat numérique ajouté : et
l'utilisation (103), par le serveur de gestion de réseau (31), de la procédure à distance du protocole TR-069 pour appeler la méthode SetParameterValues pour définir la valeur du paramètre Type de certificat de l'instance ajoutée, de manière à définir le type de certificat du certificat ajouté.

5. Procédé de la revendication 3, dans lequel
lors de la mise à jour des certificats numériques, le procédé comprend :
la détermination, à partir de toutes les instances de l'objet d'informations de certificat numérique, par le biais du serveur de gestion de réseau (31), d'une instance correspondant au certificat numérique à mettre à jour, et l'utilisation (106) de la procédure à distance du protocole TR-069 pour appeler la méthode SetParameterValues pour définir les valeurs de paramètres d'informations du certificat numérique à mettre à jour, et la valeur de paramètre d'informations comprenant StartTime et EndTime.

6. Procédé de la revendication 3, dans lequel
lors de l'effacement de certificats numériques, le procédé comprend :
la détermination, à partir de toutes les instances de l'objet d'informations de certificat numérique, par le biais du serveur de gestion de réseau (31), d'une instance correspondant à un certificat numérique à effacer, et l'utilisation (109) de la procédure à distance du protocole TR-069 pour appeler la méthode effacer un objet, DeleteObject, pour demander à la passerelle domestique (32) d'effacer l'instance correspondant au certificat numérique à effacer.

7. Procédé de la revendication 5, dans lequel, lorsque le serveur de gestion de réseau (31) détermine l'instance correspondant au certificat numérique à mettre à jour, le procédé comprend également :
la vérification de l'exactitude du contenu du certificat numérique.

8. Système de gestion de certificats numériques dans une passerelle domestique (32), dans lequel le système comprend un serveur de gestion de réseau (31) et une passerelle domestique (32),
le serveur de gestion de réseau (31) comprend un module de décision de gestion de certificats (311),
le module de décision de gestion de certificats (311) est défini pour, envoyer des informations de gestion de certificats à la passerelle domestique (32) par l'intermédiaire d'un paquet de Protocole de Gestion CPE WAN dit Technical Report-069, TR069, pour gérer à distance les certificats numériques dans la passerelle domestique (32),
où les informations de gestion de certificats comprennent deux nouveaux objets définis selon le format de protocole TR069, comportant un objet de gestion numérique et un objet d'informations de certificat numérique, où l'objet d'informations de certificat numérique est une instance de l'objet de gestion numérique et contient des informations de paramètres des certificats numériques.

9. Système de la revendication 8, dans lequel la passerelle domestique (32) comprend un module de mise en oeuvre de gestion de certificats (321),
le module de mise en oeuvre de gestion de certificats (321) est configuré pour, après avoir reçu le paquet TR069, gérer les certificats numériques comme suit selon les informations de gestion de certificats dans le paquet :
l'ajout de certificats numériques, la mise à jour de certificats numériques ou l'effacement de certificats numériques.

10. Système de la revendication 8 ou 9,
dans lequel les informations de paramètres de l'objet d'informations de certificat numérique comprend l'un ou une combinaison quelconque des éléments suivants :
le contenu, Content ;
le type de certificat, Type ;
le temps de prise d'effet, StartTime ;
le temps d'expiration, EndTime ;
le paramètre d'émetteur de certificat numérique, IsUser ; et
le paramètre d'utilisateur de certificat numérique, User.

11. Système de la revendication 10, dans lequel
le module de décision de gestion de certificats (311) est également défini pour,
ajouter des certificats numériques selon la manière suivants :
l'utilisation de la procédure à distance du protocole TR-069 pour appeler la méthode ajouter un objet, AddObject, pour demander à la passerelle domestique (32) d'ajouter une nouvelle instance de l'objet d'informations de certificat numérique ;
l'utilisation de la procédure à distance du protocole TR-069 pour appeler la méthode définir les valeurs de paramètres, SetParameterValues, pour définir les valeurs du paramètre Contenu de l'instance ajoutée, de manière à définir le contenu du certificat numérique ajouté ; et
l'utilisation de la procédure à distance du protocole TR-069 pour appeler la méthode SetParameterValues pour définir les valeurs de paramètre du Type de certificat de l'instance ajoutée, de manière à définir le type de certificat du certificat ajouté ; et/ou
mettre à jour des certificats numériques selon la manière suivante :
la détermination, à partir de toutes les instances de l'objet d'informations de certificat numérique, d'une instance correspondant à un certificat numérique à mettre à jour, et l'utilisation de la procédure à distance du protocole TR-069 pour appeler la méthode SetParameterValues pour définir les valeurs de paramètres d'informations du certificat numérique à mettre à jour, et la valeur de paramètre d'informations comprenant StartTime et EndTime ; et/ou
effacer des certificats numériques selon la manière suivante :
la détermination, à partir de toutes les instances de l'objet d'informations de certificat numérique, d'une instance correspondant à un certificat numérique à effacer, et l'utilisation de la procédure à distance du protocole TR-069 pour appeler la méthode effacer un objet, DeleteObject, pour demander à la passerelle domestique (32) d'effacer l'instance correspondant au certificat numérique à effacer.
